# FASCICULE DE BREVET EUROPEEN

(11) **EP 0 925 101 B1**
(45) Date de publication et mention de la délivrance du brevet: **21.04.2004**
(21) Numéro de dépôt: 98917261.4
(22) Date de dépôt: 27.03.1998
(51) Int. Cl.: B01D 39/16, D04H 1/42

(54) **DISPOSITIF DE FILTRATION ET PROCEDE POUR SA REALISATION**
FILTRATIONSEINRICHTUNG UND VERFAHREN ZU IHRER HERSTELLUNG
FILTRATION DEVICE AND PROCESS FOR ITS MANUFACTURE

(30) Priorité: 10.04.1997 FR 9704524
(43) Date de publication de la demande: 30.06.1999
(73) Titulaire: Valeo Matériaux de Friction, 87020 Limoges cedex 9 (FR)
(72) Inventeur: GUERIN, Richard, F-61100 Ronfeugerai (FR); LEGRAND, Claude, F-14110 Condé sur Noireau (FR)
(74) Mandataire: Lemaire, Marc
(86) Numéro de dépôt international: PCT/FR1998/000633
(87) Numéro de publication internationale: WO 1998/045023

(56) Documents cités:
- EP-A- 0 066 414
- FR-A- 2 698 285
- FR-A- 2 717 820
- US-A- 5 422 159
- DATABASE WPI Section Ch, Week 8704 Derwent Publications Ltd., London, GB; Class A88, AN 87-024115 XP002051189 & HU 40 341 A (MTA MUESZAKI KEMIAI KI) , 28 décembre 1986

## Description

La présente invention a pour objet un procédé de réalisation d'un dispositif de filtration plus particulièrement destiné à la filtration de gaz tel que l'air destiné à l'aération et/ou au chauffage et/ou à la climatisation de locaux ou de véhicules automobiles.

L'invention a également pour objet un dispositif de filtration ainsi réalisé.

Des dispositifs de filtration de l'état de la technique sont réalisés en procédant au filage d'un polymère thermoplastique au travers de buses, de telle sorte qu'il se produise un entremêlement des filaments issus des buses, formant, après refroidissement, une nappe susceptible de constituer un filtre à particules. De tels procédés sont décrits dans les documents FR-A-2 698 285 et US-A-5 422 159.

Les procédés connus présentent l'inconvénient de nécessiter de superposer et lier plusieurs couches afin d'obtenir des filtres suffisamment efficaces.

Les filtres ainsi obtenus présentent une densité importante et sont d'un prix de revient élevé.

L'invention a pour but la réalisation d'un dispositif de filtration efficace moins dense et plus économique que ceux de l'état de la technique.

Le procédé de réalisation d'un dispositif de filtration du type précité est, selon l'invention, caractérisé en ce qu'il comprend une opération de cardage de fibres présentant une longueur comprise entre 38 mm et 120 mm et un diamètre supérieur à 10µm, pour former un voile de carde isotrope, et en ce que ledit voile est soumis à une opération de consolidation mécanique au moyen d'un liage hydraulique consistant à faire traverser le voile disposé sur un tambour rotatif par des jets d'eau très fins sous haute pression, suivi d'une opération de séchage.

Selon d'autres caractéristiques du procédé selon l'invention, qui peuvent être prises indépendamment ou dans toutes leurs combinaisons techniquement possibles :
- l'opération de cardage est réalisée au moyen d'une carde de type laine ;
- ladite carde comporte des brouilleurs de type "pêle-mêle" ;
- lors du liage hydraulique, la pression des jets d'eau est comprise entre 40 et 200 bars ;
- les paramètre de la carde sont choisis de manière à obtenir un voile présentant une masse surfacique d'environ 20 à environ 150g/m².

Le dispositif de filtration du type précité est, selon l'invention, caractérisé en ce qu'il comporte un voile de carde isotrope.

Selon d'autres caractéristiques du dispositif de filtration selon l'invention, qui peuvent être prises indépendamment ou dans toutes leurs combinaisons techniquement possibles :
- ledit voile est en un seule couche ;
- la longueur desdites fibres est au moins égale à 38 mm ;
- la longueur desdites fibres est au plus égale à 120 mm ;
- le diamètre moyen desdites fibres est au moins égal à 10 µm ;
- lesdites fibres sont des fibres de même nature ou un mélange de fibres différentes ;
- lesdites fibres sont choisies parmi le groupe des fibres thermoplastiques telles que les fibres de polypropylène, de polyéthylène, de polyester, de polycarbonate, de polyamide, le groupe des fibres acryliques, des fibres acryliques préoxydées, le groupe des fibres aramides, le groupe des fibres phénoliques, le groupe des fibres fluorocarbonées, le groupe des fibres minérales telles que les fibres de verre, le groupe des fibres métalliques.

On a constaté que, grâce à l'invention, on obtient un dispositif de filtration efficace, d'un prix de revient moins élevé, et d'une densité plus faible que les dispositifs de filtration de l'état de la technique.

Un autre avantage important par rapport à l'état de la technique est que la perte de charge présentée lors du passage d'un gaz à travers le dispositif de filtration est nettement plus faible.

D'autres aspects et avantages de l'invention apparaîtront dans la description ci-après d'un exemple de réalisation d'un dispositif de filtration destiné à être placé dans un appareil de chauffage/climatisation de véhicule automobile.

Des fibres de polypropylène d'une finesse de 1,7 dtex (diamètre 14 µm) sont coupées à une longueur de 40 mm puis introduites dans un mélangeur.

Le mélange de fibres obtenu est ensuite cardé au moyen d'une carde de type laine à double peigneur équipée d'un brouilleur de type pêle-mêle afin d'obtenir un voile de carde isotrope.

Selon une variante du procédé, le voile est, en sortie de carde, introduit dans un condenseur pour former une nappe en une seule couche.

Les paramètres de la carde et/ou du condenseur sont choisis de manière à obtenir un voile ou une nappe présentant une masse surfacique d'environ 20 à environ 150 g/m².

Le voile ou la nappe est déposé sur un tapis puis consolidé par une opération de liage hydraulique.

L'opération de liage hydraulique consiste à faire traverser le voile ou la nappe disposé sur un tambour rotatif par des jets d'eau.très fins sous haute pression (40 à 200 bars).

En rebondissant sur le tambour, les jets d'eau provoquent un nouage des fibres conférant au voile ou à la nappe une résistance mécanique importante sans pour autant en augmenter, de manière conséquente, la densité.

Après séchage, le voile ou la nappe est monté sur un support pour former le dispositif de filtration.

De la sorte, avec un voile ou une nappe de 0,84 mm d'épaisseur, on a pu former un filtre présentant une masse surfacique de 66 g/m² et de densité 0,07.

Pour tester l'efficacité du filtre ainsi réalisé, on a placé ce dernier en travers d'une veine de section égale à 100 cm², parcourue par un courant d'air chargé de particules à une vitesse de 20 cm/s.

Les particules correspondent à une poudre dite « poudre SAE fine » qui est définie par la norme des Etats-Unis d'Amérique, référence SAE J 726 / ISO 5011.

La concentration de particules est de 100 mg/m³.

On constate, d'une part, que la perte de charge au travers du filtre n'est, dans ces conditions, que de 14 Pa et que, d'autre part, l'efficacité atteint 80 %.

Par rapport aux dispositifs de filtration actuellement sur le marché, on a obtenu une efficacité comparable aux meilleurs d'entre eux avec un produit d'une densité beaucoup plus faible (0,07 contre 0,12 à 0,30) et engendrant une perte de charge nettement plus faible.

Des tests d'endurance ont en outre démontré une plus grande stabilité dans le temps de l'efficacité du dispositif de filtration selon l'invention.

Par ailleurs, le procédé décrit ci-dessus se déroule en continu et permet d'obtenir le dispositif de filtration en une seule opération.

## Revendications

1. Procédé de réalisation d'un dispositif de filtration plus particulièrement destiné à la filtration de gaz tel que l'air destiné à l'aération et/ou au chauffage et/ou à la climatisation de locaux ou de véhicules automobiles, **caractérisé en ce qu'**il comprend une opération de cardage de fibres présentant une longueur comprise entre 38 mm et 120 mm et un diamètre supérieur à 10µm, pour former un voile de carde isotrope, et **en ce que** ledit voile est soumis à une opération de consolidation mécanique au moyen d'un liage hydraulique consistant à faire traverser le voile disposé sur un tambour rotatif par des jets d'eau très fins sous haute pression, suivi d'une opération de séchage.

2. Procédé selon la revendication 1, **caractérisé en ce que** l'opération de cardage est réalisée au moyen d'une carde de type laine.

3. Procédé selon la revendication 2, **caractérisé en ce que** ladite carde comporte des brouilleurs de type "pêle-mêle".

4. Procédé selon l'une quelconque des revendications 1 à 3, **caractérisé en ce que** la pression des jets d'eau est comprise entre 40 et 200 bars.

5. Procédé selon l'une quelconque des revendications 1 à 4, **caractérisé en ce que** les paramètres de la carde sont choisis de manière à obtenir un voile présentant une masse surfacique d'environ 20 à environ 150g/m².

6. Procédé selon l'une quelconque des revendications précédentes, **caractérisé en ce que** le voile est en une seule couche.

7. Procédé selon l'une quelconque des revendications précédentes, **caractérisé en ce que** lesdites fibres sont des fibres de même nature ou un mélange de fibres différentes.

8. Procédé selon la revendication 7, **caractérisé en ce que** lesdites fibres sont choisies parmi le groupe des fibres thermoplastiques telles que les fibres de polypropylène, de polyéthylène, de polyester, de polycarbonate, de polyamide, le groupe des fibres acryliques, des fibres acryliques préoxydées, le groupe des fibres aramides, le groupe des fibres phénoliques, le groupe des fibres fluorocarbonées, le groupe des fibres minérales telles que les fibres de verre, le groupe des fibres métalliques.

9. Dispositif de filtration destiné à la filtration de gaz tel que l'air destiné à l'aération et/ou au chauffage et/ou à la climatisation de locaux ou de véhicules automobiles, réalisable par le procédé suivant l'une quelconque des revendications précédentes, **caractérisé en ce qu'**il est formé d'un voile de carde isotrope constitué de fibres présentant une longueur comprise entre 38mm et 120mm et un diamètre supérieur à 10µm.

10. Dispositif de filtration selon la revendication 9, **caractérisé en ce que** le voile est en une seule couche.

11. Dispositif supérieur de filtration selon la revendicacion 9 ou 10, **caractérisé en ce que** le voile de carde isotrope est constitué de fibres de polypropylène présentant une longueur comprise entre 38mm et 120mm et un diamètre moyen supérieur à 10µm.

## Patentansprüche

1. Verfahren zur Herstellung einer Filtervorrichtung, die insbesondere zur Filterung von Gas, etwa von Luft zur Belüftung und/oder Heizung und/oder Klimatisierung von Räumen oder Kraftfahrzeugen bestimmt ist, **dadurch gekennzeichnet, dass** es einen Vorgang zum Krempeln von Fasern mit einer Länge zwischen 38 mm und 120 mm und einem Durchmesser von mehr als 10 µm umfasst, um ein isotropes Krempelvlies zu bilden, und dass das besagte Vlies einem Vorgang zur mechanischen Verfestigung mittels einer Wasserdruckbindung unterzogen wird, die darin besteht, durch das auf einer Drehtrommel angeordnete Vlies sehr dünne Hochdruck-Wasserstrahlen hindurchtreten zu lassen, woraufhin ein Trockungsvorgang erfolgt.

2. Verfahren nach Anspruch 1, **dadurch gekennzeichnet, dass** der Krempelvorgang anhand einer Karde des Typs Wollkrempel erfolgt.

3. Verfahren nach Anspruch 2 , **dadurch gekennzeichnet, dass** die besagte Karde "Wirrfaser"-Verwirreinrichtungen umfasst.

4. Verfahren nach einem der Ansprüche 1 bis 3 , **dadurch gekennzeichnet, dass** der Druck der Wasserstrahlen zwischen 40 und 200 bar liegt.

5. Verfahren nach einem der Ansprüche 1 bis 4 , **dadurch gekennzeichnet, dass** die Parameter der Karde so gewählt werden, dass sich ein Vlies mit einer flächenbezogenen Masse von etwa 20 bis etwa 150 g/m² ergibt.

6. Verfahren nach einem der vorangehenden Ansprüche, **dadurch gekennzeichnet, dass** das Vlies aus einer einzigen Lage besteht.

7. Verfahren nach einem der vorangehenden Ansprüche, **dadurch gekennzeichnet, dass** die besagten Fasern Fasern der gleichen Art oder eine Mischung aus unterschiedlichen Fasern sind.

8. Verfahren nach Anspruch 7 , **dadurch gekennzeichnet, dass** die besagten Fasem aus der Gruppe der thermoplastischen Fasem, etwa Polypropylen-, Polyethylen-, Polyester-, Polycarbonat-, Polyamidfasern, der Gruppe der Acrylfasern, der voroxidierten Acrylfasem, der Gruppe der Aramidfasem, der Gruppe der Phenolfasem, der Gruppe der Fluorkohlenstoffasem, der Gruppe der Mineralfasem, wie etwa Glasfasern, und der Gruppe der Metallfasem ausgewählt werden.

9. Filtervorrichtung zur Filterung von Gas, etwa von Luft für die Belüftung und/oder Heizung und/oder Klimatisierung von Räumen oder Kraftfahrzeugen, die durch das Verfahren nach einem der vorangehenden Ansprüche ausführbar ist, **dadurch gekennzeichnet, dass** sie durch ein isotropes Krempelvlies gebildet wird, das aus Fasern besteht, die eine Länge zwischen 38 mm und 120 mm und einen mittleren Durchmesser von mehr als 10 µm aufweisen.

10. Filtervorrichtung nach Anspruch 9 , **dadurch gekennzeichnet, dass** das Vlies aus einer einzigen Lage besteht.

11. Filtervorrichtung nach Anspruch 9 oder 10 , **dadurch gekennzeichnet, dass** das istotrope Krempelvlies aus Polypropylenfasem besteht, die eine Länge zwischen 38 mm und 120 mm und einen mittleren Durchmesser von mehr als 10 µm aufweisen.

## Claims

1. A method of producing a filtration device more particularly intended for filtering gases such as air for ventilating and/or heating and/or air conditioning premises or automobile vehicles, **characterised in that** it includes an operation of carding fibres having a length from 38 mm to 120 mm and a diameter greater than 10 µm to form an isotropic card web and **in that** said web is subjected to a mechanical consolidation operation by means of hydraulic binding consisting in passing very fine jets of water at a high pressure through the web disposed on a rotary drum followed by a drying operation.

2. A method according to claim 1, **characterised in that** the carding operation is carried out using a wool card.

3. A method according to claim 2, **characterised in that** said card includes pell-mell tangling devices.

4. A method according to any one of claims 1 to 3, **characterised in that** the pressure of the water jets is from 40 to 200 bar.

5. A method according to any one of claims 1 to 4, **characterised in that** the parameters of the card are chosen to obtain a web having an approximate mass per unit surface area from 20 to 150 g/m².

6. A method according to any one of the preceding claims, **characterised in that** the web is a single-layer web.

7. A method according to any one of the preceding claims, **characterised in that** said fibres are fibres of the same nature or a mixture of different fibres.

8. A method according to claim 7, **characterised in that** said fibres are chosen from the group of thermoplastics fibres such as fibres of polypropylene, polyethylene, polyester, polycarbonate, polyamide, the group of acrylic fibres, pre-oxidised acrylic fibres, the group of aramide fibres, the group of phenolic fibres, the group of fluorocarbonated fibres, the group of mineral fibres such as glass fibres, and the group of metal fibres.

9. A filtration device for filtering gases such as air for ventilating and/or heating and/or air conditioning premises or automobile vehicles, which device can be produced by the method according to any one of the preceding claims and is **characterised in that** it is formed of an isotropic card web consisting of fibres having a length from 38 mm to 120 mm and a diameter greater than 10 µm.

10. A filtration device according to claim 9, **characterised in that** the web is a single-layer web.

11. A filtration device according to claim 9 or claim 10, **characterised in that** the isotropic card web consists of polypropylene fibres having a length from 38 mm to 120 mm and an average diameter greater than 10 µm.
